# FASCICULE DE BREVET EUROPEEN

(11) **EP 2 017 123 B1**
(45) Date de publication et mention de la délivrance du brevet: **07.07.2010**
(21) Numéro de dépôt: 08305189.6
(22) Date de dépôt: 22.05.2008
(51) Int. Cl.: B60Q 1/04, B62D 25/08, B60R 19/02, B60R 21/34, B60Q 1/00, B62D 65/16

(54) **Face avant de véhicule automobile comportant au moins une glace de bloc optique et un pare-chocs**
Frontseite eines Kraftfahrzeugs, die mindestens eine Verglasung für die Scheinwerfereinheit und eine Stoßstange umfasst
Front face of an automobile vehicle comprising at least one window for an optical unit and a bumper.

(30) Priorité: 16.07.2007 FR 0756508
(43) Date de publication de la demande: 21.01.2009
(73) Titulaire: PEUGEOT CITROËN AUTOMOBILES SA, 78140 Vélizy Villacoublay (FR)
(72) Inventeur: Bouret, Pascal, 78610, Les Breviaires (FR)

(56) Documents cités:
- WO-A-2007/135023
- DE-A1- 10 101 789

## Description

La présente invention concerne une face avant de véhicule automobile comportant au moins une glace de bloc optique et un pare-chocs, ainsi qu'un véhicule automobile muni d'une telle face avant.

Les véhicules automobiles comportent une face avant comprenant, entre autres, généralement deux blocs optiques qui constituent les organes d'éclairage avant du véhicule, et une peau de pare-chocs.

Un des objectifs des constructeurs de véhicules automobiles réside dans la gestion des jeux et des affleurements entre les différents éléments de la carrosserie et notamment entre les blocs optiques et la peau de pare-chocs qui est très importante pour l'esthétique de la face avant du véhicule.

En effet, la peau de pare-chocs doit être soutenue suivant la direction verticale et le jeu entre les blocs optiques et le rebord supérieur de cette peau de pare-chocs doit être nul ou tout du moins homogène.

Pour résoudre ce problème, il est ainsi connu du document WO 2007/135023 qui divulgue toutes les caractéristiques du préambule de la revendication 1, de ménager directement sur la glace de chaque bloc optique au moins un support sur lequel vient s'appliquer un bord transversal supérieur de la peau de pare-chocs de façon à assurer un bon positionnement de cette peau dans une direction verticale.

Le support est disposé au-dessous d'un rebord transversal ménagé sur la glace du bloc optique correspondant, l'espace situé entre le support et le rebord transversal constitue un logement pour le bord supérieur de la peau de pare-chocs permettant ainsi un positionnement idéal de cette peau de pare-chocs entre la glace et le support.

Mais, les constructeurs de véhicules automobiles doivent aussi gérer la notion d'absorption de l'énergie lors d'un choc à faible vitesse dit choc "réparabilité" ou lors d'un choc dit "piéton".

A cet effet, les blocs optiques intègrent désormais des aménagements pour fragiliser la glace, par exemple par des réductions locales d'épaisseur.

Mais, la rupture de la glace du bloc optique intervient au bout d'une course importante et d'un écrasement complet de la peau de pare-chocs et d'un endommagement important des pièces environnantes.

De plus, l'ajout de la fonction de support de la peau de pare-chocs à la glace des blocs optiques génère un effet négatif pour le comportement de ces blocs optiques lors des chocs.

En effet, les supports de la peau de pare-chocs constituent des protubérances qui entraînent des points durs pénalisant l'absorption de l'énergie lors des chocs.

L'invention a pour but de proposer une face avant de véhicule automobile qui évite ces inconvénients.

L'invention a donc pour objet une face avant de véhicule automobile comportant au moins une glace d'un bloc optique et un pare-chocs, ladite glace comportant une partie dissimulée derrière une peau de pare-chocs et au moins un support de cette peau de pare-chocs ménagé sur ladite partie dissimulée, caractérisé en ce que la peau de pare-chocs comporte, sur sa face interne, au moins un élément en saillie destiné à rompre une zone localisée de la partie dissimulée de la glace avant le contact de ladite peau de pare-chocs sur la glace, lors d'un choc.

Selon d'autres caractéristiques de l'invention :
- la zone localisée est située dans la partie dissimulée de la peau de pare-chocs au niveau dudit au moins support,
- la zone localisée est située dans la partie dissimulée de la peau de pare-chocs à proximité dudit au moins support,
- la zone localisée est délimitée en partie par une ligne de plus faible épaisseur ménagée dans la partie dissimulée de la glace,
- l'élément en saillie est formé par au moins une nervure moulée sur la face interne de la peau de pare-chocs, et
- l'élément en saillie est formé par au moins un plot moulé sur la face interne de la peau de pare-chocs.

L'invention concerne également un véhicule automobile, caractérisée en ce qu'il comporte une face avant telle que précédemment mentionnée.

D'autres caractéristiques et avantages de l'invention apparaîtront à la lecture de la description qui va suivre, donnée à titre d'exemple et faite en référence aux dessins annexés, sur lesquels :
- La Fig. 1 est une vue schématique en perspective d'une face avant d'un véhicule automobile,
- la Fig. 2 est une vue schématique en perspective d'un bloc optique équipé d'un dispositif de positionnement d'une peau de pare-chocs, selon un premier mode de réalisation,
- les Fig. 3 et 4 sont des vues schématiques en coupe verticale du bloc optique et d'une peau de pare-chocs équipée d'un dispositif de rupture de la glace du bloc optique, selon le premier mode de réalisation de l'invention,
- la Fig. 5 est une vue schématique en perspective d'un bloc optique équipé d'un dispositif de positionnement d'une peau de pare-chocs, selon un second mode de réalisation, et
- les Fig. 6 et 7 sont des vues schématiques en coupe verticale du bloc optique et de la peau de pare-chocs munie d'un dispositif de rupture de la glace du bloc optique, selon le second mode de réalisation de l'invention.

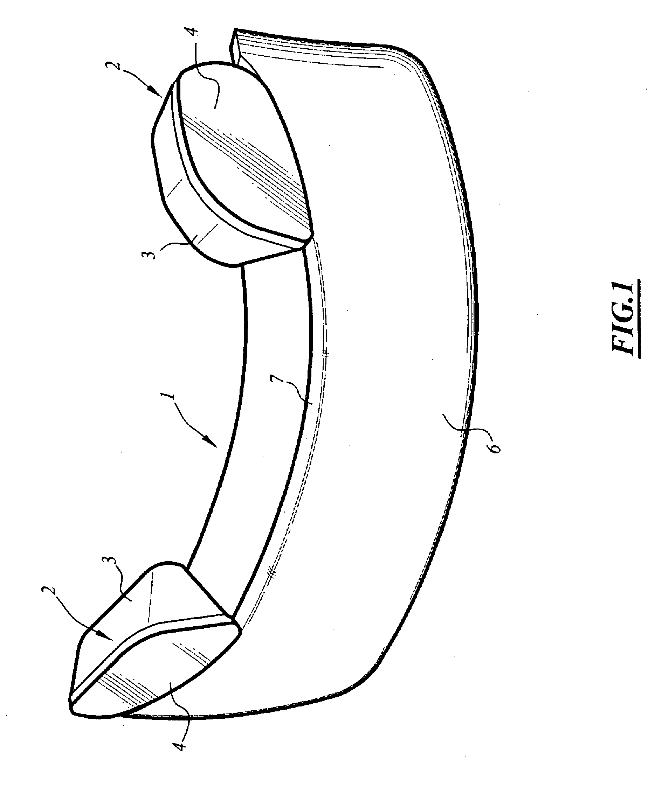

Sur la Fig. 1, on a représenté schématiquement en partie une face avant 1 d'un véhicule automobile qui comprend, entre autres, au moins un bloc optique 2 et de préférence deux blocs optiques 2 comportant chacun, de manière classique, un boîtier 3 et une glace 4.

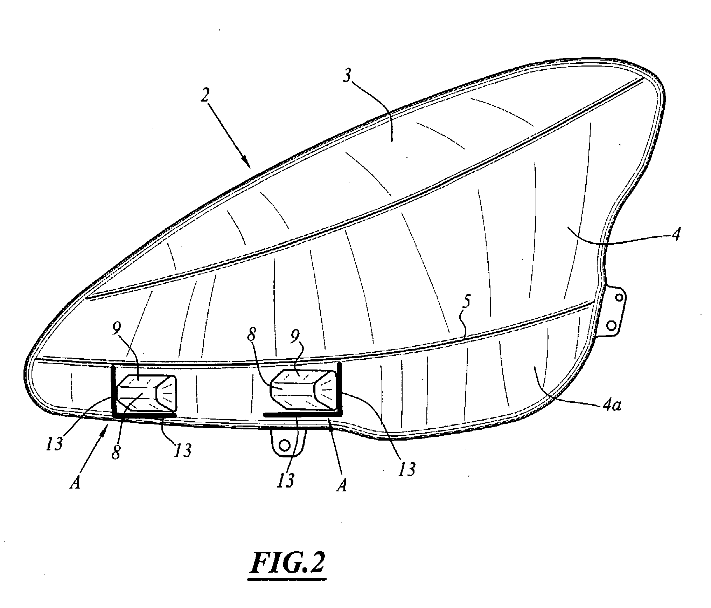

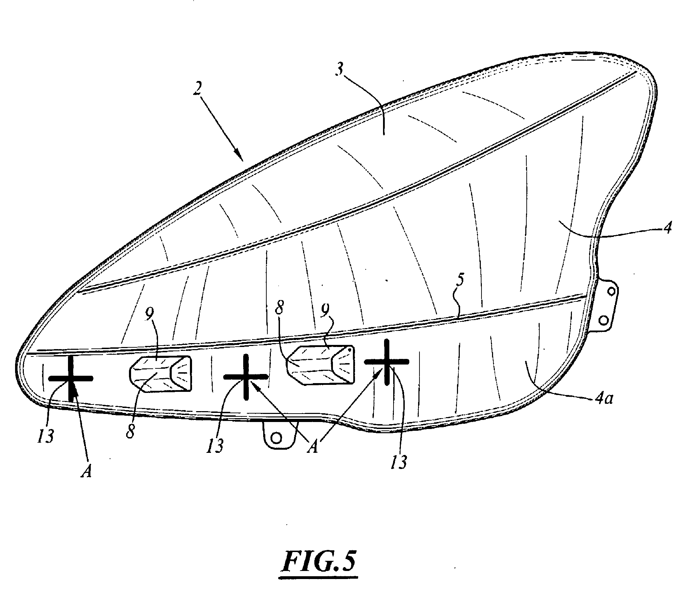

Ainsi que montré sur les Figs. 2 et 5, la glace 4 de chaque bloc optique 2 comporte un rebord transversal 5.

La face avant 1 représentée à la Fig. 1, comprend également une peau de pare-chocs 6 qui s'étend sur toute la largeur de cette face avant au-dessous des deux blocs optiques 2 et qui comporte un rebord transversal supérieur 7.

Pour gérer les jeux et les affleurements entre les blocs optiques 2 et la peau de pare-chocs 6, la face avant 1 est équipée de dispositifs de positionnement qui comprennent, pour chaque bloc optique 2, au moins un support 8 formé par une excroissance rapportée directement sur le bloc optique 2 et notamment sur la glace 4 au-dessous du rebord transversal 5.

Dans les deux exemples de réalisation représentés sur les Figs. 2 et 5, le bloc optique 2 comporte deux supports 8 espacés l'un de l'autre. Chaque support 8 ménage avec le rebord transversal 5, un logement 9 de positionnement du bord transversal supérieur 7 de la peau de pare-chocs 6.

Lorsque la peau de pare-chocs 6 est positionnée sur la face avant 1 du véhicule automobile, avec son bord transversal supérieur 7 disposé dans le logement 9, la glace 4 du bloc optique 2 comporte une partie 4a dissimulée derrière la peau de pare-chocs 6 et sur laquelle sont ménagés les supports 8.

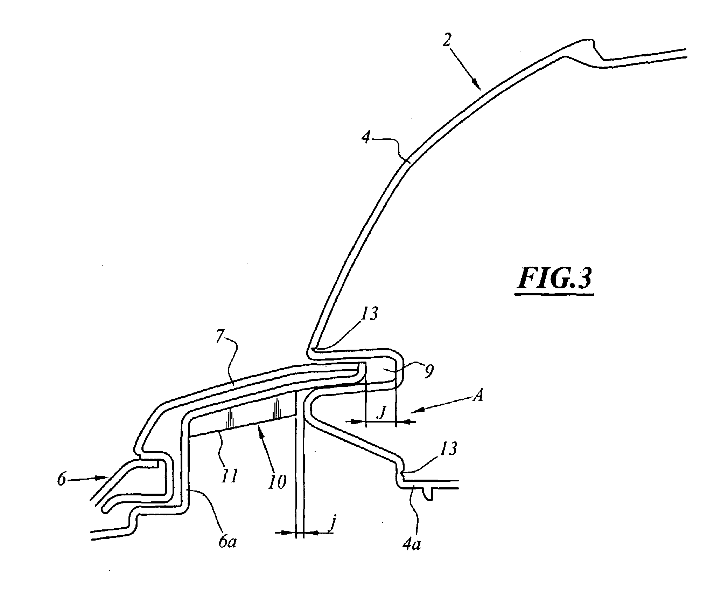

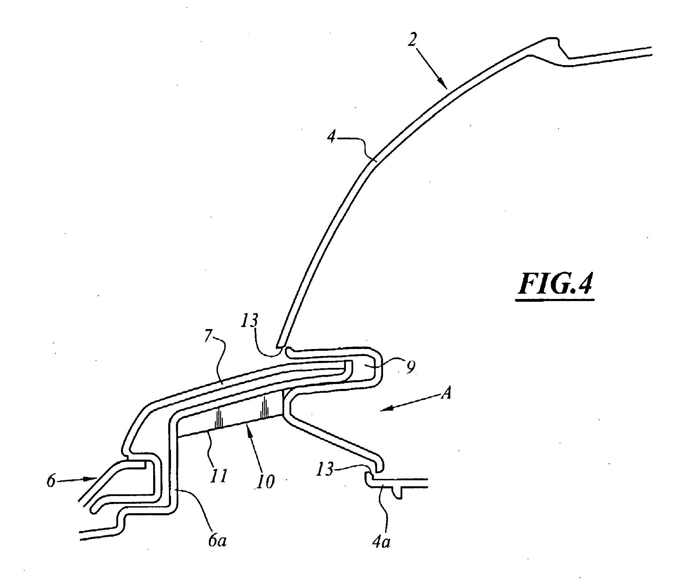

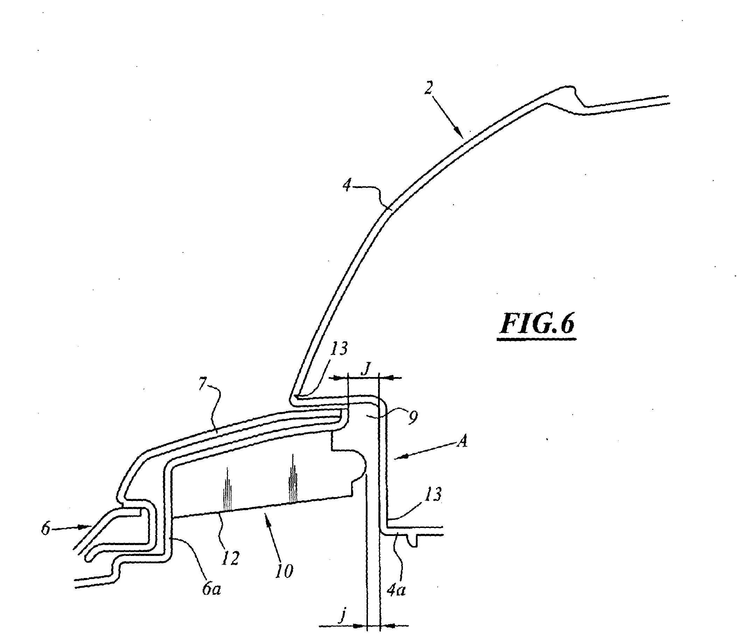

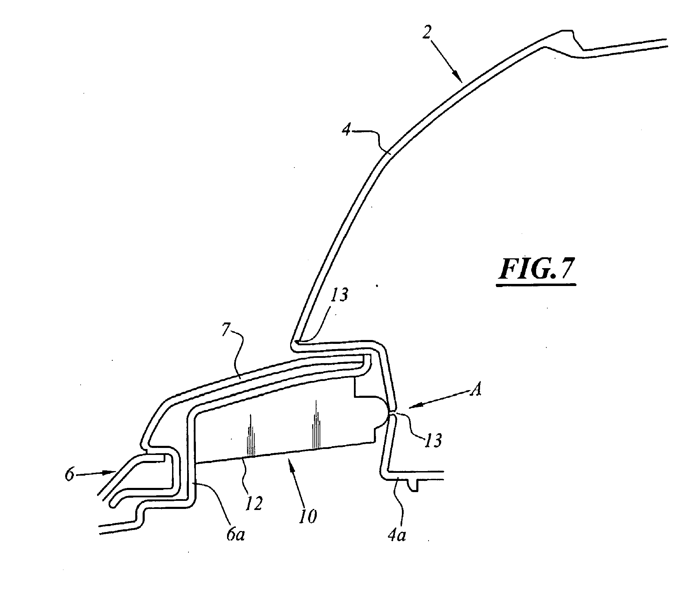

Ainsi que montré sur les Figs. 3 et 6, la peau de pare-chocs 6 comporte, sur sa face interne 6a, au moins un élément en saillie 10 destiné à fracturer une zone localisée A de la partie 4a dissimulée de la glace 4 lors d'un choc au niveau du pare-chocs. Les Figs. 4 et 7 montrent les zones localisées A rompues après que le pare-chocs est reçu un choc.

Le bord de l'élément en saillie 10 ménage avec la partie dissimulée 4a de la glace 4 un jeu "j" qui est inférieur au jeu "J" ménagé entre le bord transversal 7 de la peau de pare-chocs 6 et ladite partie dissimulée 4a de la glace 4.

L'élément en saillie 10 est formé par au moins une nervure 11 (Fig. 3) moulée sur la face interne 6a de la peau de pare-chocs 6 ou par au moins un plot 12 (Fig. 6) également moulé sur la face interne 6a de la peau de pare-chocs 6.

Selon un premier mode de réalisation représenté sur les Figs. 2 à 4, la zone localisée A de fracture de la partie dissimulée 4a de la glace 4 par ladite au moins nervure 11, est située au niveau de chaque support 8. Afin de faciliter la rupture de chaque zone localisée A de la partie dissimulée 4a de la glace 4, cette zone localisée A est délimitée en partie par une ligne 13 de plus faible épaisseur ménagée dans ladite partie dissimulée 4a de la glace 4.

Dans l'exemple de réalisation représenté sur les Figs. 2 à 4, chaque support 8 est partiellement entouré par une ligne 13 de plus faible épaisseur.

Selon une variante, la totalité de chaque support 8 peut être entourée par une ligne 13 de plus faible épaisseur.

Selon un second mode de réalisation représenté sur les Figs. 5 à 7, une zone localisée A de rupture de la partie dissimulée 4a de la glace 4 par un plot 12 ménagé sur la face interne 6a de la peau de pare-chocs 6, est située à proximité du support 8 et de préférence de part et d'autres de chaque support 8.

Chaque zone localisée A comporte au moins une ligne 13 de plus faible épaisseur et, dans l'exemple de réalisation représenté sur les Figs. 5 à 7, chaque zone localisée A de rupture comporte deux lignes 13 de plus faible épaisseur disposées en croix.

De même, pour chaque mode de réalisation, le rebord transversal 5 peut également être de plus faible épaisseur que la glace 4.

Les nervures 11 ou les plots 12 ont une géométrie déterminée et sont de préférence directement moulés sur la face interne 6a de la peau de pare-chocs 6 ; bien évidemment, les nervures 11 ou les plots 12 peuvent être des éléments rapportés. La forme et l'épaisseur de ces nervures 11 ou de ces plots 12 n'a pas d'incidence visible car ils sont dissimulés derrière la peau de pare-chocs.

Lors d'un choc, comme cela est représenté sur les Figs. 4 et 7, les nervures 11 ou les plots 12 entrent en contact avec la partie dissimulée 4a de la glace 4 dans une zone localisée A délimitée par une ou plusieurs lignes 13 de plus faible épaisseur selon une course de déplacement déterminée, ce qui entraîne la rupture des lignes 13 de plus faible épaisseur.

La glace 4 se rompt ce qui provoque ainsi l'affaiblissement général du bloc optique 2 qui n'offre qu'une résistance limitée au moment où le pare-chocs est heurté. Ainsi, grâce à l'invention, les pièces situées dans l'environnement de la glace 4 peuvent être plus facilement sauvegardées en cas de choc à faible vitesse.

## Revendications

1. Face avant de véhicule automobile comportant au moins une glace (4) d'un bloc optique (2) et un pare-chocs (6), ladite glace (4) comportant une partie (4a) dissimulée derrière la peau de pare-chocs (6) et au moins un support (8) de cette peau de pare-chocs (6), ménagé sur ladite partie (4a) dissimulée de la glace (4), **caractérisé en ce que** la peau de pare-chocs (6) comprend, sur sa face interne (6a), au moins un élément en saillie (10) destiné à rompre une zone localisée A de la partie (4a) dissimulée de la glace (4) lors d'un choc.

2. Face avant selon la revendication 1, **caractérisé en ce que** la zone localisée A est située dans la partie (4a) dissimulée de la peau de pare-chocs (6) au niveau dudit au moins support (8).

3. Face avant selon la revendication 1, **caractérisé en ce que** la zone localisée A est située dans la partie (4a) dissimulée de la peau de pare-chocs (6) à proximité dudit au moins support (8).

4. Face avant selon l'une quelconque des revendications 1 à 3, **caractérisé en ce que** la zone localisée A est délimitée en partie par une ligne (13) de plus faible épaisseur ménagée dans la partie (4a) dissimulée de la glace (4).

5. Face avant selon l'une quelconque des revendications 1 à 4, **caractérisé en ce que** l'élément en saillie (10) est formé par au moins une nervure (11) moulée sur la face interne (6a) de la peau de pare-chocs (6).

6. Face avant selon l'une quelconque des revendications 1 à 4, **caractérisé en ce que** l'élément en saillie (10) est formé par au moins un plot (12) moulé sur la face interne (6a) de la peau de pare-chocs (6).

7. Véhicule automobile, **caractérisé en ce qu'**il comporte une face avant, selon l'une quelconque des revendications 1 à 6.

## Claims

1. Front face of a motor vehicle comprising at least one lens (4) of a lamp unit (2) and a bumper (6), said lens (4) comprising a part (4a) which is hidden behind the bumper skin (6) and at least one mount (8) for this bumper skin (6), formed on said hidden part (4a) of the lens (4), **characterized in that** the bumper skin (6) comprises, on its inside face (6a), at least one projecting element (10) designed to break a localized area A of the hidden part (4a) of the lens (4) in an impact.

2. Front face according to Claim 1, **characterized in that** the localized area A is situated in the hidden part (4a) of the bumper (6) at said mount or mounts (8).

3. Front face according to Claim 1, **characterized in that** the localized area A is situated in the hidden part (4a) of the bumper (6) near said mount or mounts (8).

4. Front face according to any one of Claims 1 to 3, **characterized in that** the localized area A is bounded in part by a thinner line (13) formed in the hidden part (4a) of the lens (4).

5. Front face according to any one of Claims 1 to 4, **characterized in that** the projecting element (10) is formed by at least one rib (11) moulded on the inside face (6a) of the bumper skin (6).

6. Front face according to any one of Claims 1 to 4, **characterized in that** the projecting element (10) is formed by at least one stud (12) moulded on the inside face (6a) of the bumper skin (6).

7. Motor vehicle **characterized in that** it comprises a front face according to any one of Claims 1 to 6.

## Patentansprüche

1. Frontseite eines Kraftfahrzeugs, die mindestens eine Verglasung (4) für eine Leuchteneinheit (2) und einen Stoßfänger (6) umfasst, wobei die Verglasung (4) einen verborgenen Teil (4a) hinter der Haut des Stoßfängers (6) und mindestens einen Träger (8) dieser Haut des Stoßfängers (6), der an dem verborgenen Teil (4a) der Verglasung (4) ausgebildet ist, umfasst, **dadurch gekennzeichnet, dass** die Haut des Stoßfängers (6) an ihrer Innenseite (6a) mindestens ein vorragendes Element (10) aufweist, das einen lokalisierten Bereich A des verborgenen Teils (4a) der Verglasung (4) bei einem Aufprall zerbrechen soll.

2. Frontseite nach Anspruch 1, **dadurch gekennzeichnet, dass** sich der lokalisierte Bereich A in dem verborgenen Teil (4a) der Haut des Stoßfängers (6) an dem mindestens einen Trägers (8) befindet.

3. Frontseite nach Anspruch 1, **dadurch gekennzeichnet, dass** sich der lokalisierte Bereich A in dem verborgenen Teil (4a) der Haut des Stoßfängers (6) in der Nähe des mindestens einen Trägers (8) befindet.

4. Frontseite nach einem der Ansprüche 1 bis 3, **dadurch gekennzeichnet, dass** der lokalisierte Bereich A teilweise durch eine Linie (13) geringerer Dicke begrenzt wird, die in dem verborgenen Teil (4a) der Verglasung (4) ausgebildet ist.

5. Frontseite nach einem der Ansprüche 1 bis 4, **dadurch gekennzeichnet, dass** das vorragende Element (10) durch mindestens eine Rippe (11) gebildet wird, die an der Innenseite (6a) der Haupt des Stoßfängers (6) angeformt ist.

6. Frontseite nach einem der Ansprüche 1 bis 4, **dadurch gekennzeichnet, dass** das vorragende Element (10) durch mindestens einen Ansatz (12) gebildet wird, der an der Innenseite (6a) der Haut des Stoßfängers (6) angeformt ist.

7. Kraftfahrzeug, **dadurch gekennzeichnet, dass** es eine Frontseite nach einem der Ansprüche 1 bis 6 umfasst.
